# EUROPÄISCHE PATENTSCHRIFT

(11) **EP 2 036 815 B1**
(45) Veröffentlichungstag und Bekanntmachung des Hinweises auf die Patenterteilung: **01.05.2013**
(21) Anmeldenummer: 07017880.1
(22) Anmeldetag: 12.09.2007
(51) Int. Cl.: B63B 21/50, B63B 35/44

(54) **Verfahren zur Installation und Deinstallation einer Gründungsstruktur sowie Gründungsstruktur und Auftriebskörper**
Method for installing and de-installing a foundation structure, foundation structure and lifting body
Procédé d'installation et de démontage d'une structure de fondation ainsi que structure de fondation et flotteur

(43) Veröffentlichungstag der Anmeldung: 18.03.2009
(73) Patentinhaber: WeserWind GmbH, 27572 Bremerhaven (DE)
(72) Erfinder: Müller, Klaus, 48431 Rheine (DE); Kassen, Dirk, 49124 Georgsmarienhütte (DE); Möller, Jürgen, Dr., 27578 Bremerhaven (DE); Surma, René, 27619 Schiffdorf (DE)
(74) Vertreter: Möller, Friedrich

(56) Entgegenhaltungen:
- FR-A- 1 389 216
- GB-A- 2 378 679
- US-A- 4 048 945
- US-A1- 2006 039 758

## Beschreibung

Die Erfindung betrifft ein Verfahren zur Installation einer Gründungsstruktur für eine Offshore-Anlage gemäß dem Oberbegriff des Anspruchs 1, sowie eine entsprechende Gründungsstruktur nach dem Oberbegriff des Anspruchs 7.

Der Transport von Offshore-Strukturen, insbesondere von Gründungsstrukturen und/oder Gründungspfählen, erfolgt üblicherweise mit Hilfe von Schiffen oder Pontons, auf welchen die Offshore-Strukturen ruhen. Am Installationsort werden die Offshore-Strukturen mit Hilfe geeigneter Hubvorrichtungen vom Schiff oder Ponton heruntergenommen und im Wasser abgesetzt. Für diesen Vorgang sind Schwerlastkrane erforderlich, die für Hakenlasten von mehreren hundert Tonnen, in der Regel mehr als 500 Tonnen, ausgelegt sind. Der Transport und das Absetzen der Offshore-Strukturen sind dadurch erschwert und kostspielig.

Bei hohen Wellen birgt die Relativbewegung vom Kran zum Schiff oder Ponton ein zusätzliches Risiko. Die durch den Kran aufgenommenen Offshore-Strukturen schlagen bei einem ungünstigen Zusammentreffen von Wellenberg und Wellental unkontrolliert auf das Deck des Schiffs oder Pontons auf und richten Schaden an.

Aus der US 2006/0039758 A1 sind eine Vorrichtung und ein Verfahren zur Installation einer schwimmenden Monosäulen-Plattform bekannt. Zur Installation werden Schwimmkörper an der schwimmenden Plattform befestigt, die mit Wasser befüllt werden, um die Plattform zeitweise ausreichend abzusenken, um sie mit am Meeresgrund befestigten Seilen zu verbinden, die nach Entfernung der Schwimmkörper dem Auftrieb der Plattform entgegenwirken.

Aufgabe der vorliegenden Erfindung ist es, Verfahren zur Installation oder Deinstallation von Gründungsstrukturen für Offshore-Anlagen sowie eine entsprechende Gründungsstruktur bereitzustellen, womit eine Installation oder Deinstallation der Gründungsstruktur einfach, schnell, kostengünstig und sicher erfolgt.

Die Aufgabe wird erfindungsgemäß durch ein Verfahren mit den Merkmalen des Anspruchs 1 gelöst. Das erfindungsgemäße Verfahren zur Installation einer Gründungsstruktur für eine Offshore-Anlage, beispielsweise eine Offshore-Windenergieanlage, wobei die Gründungsstruktur schwimmend zu einem Gründungsort transportiert, an dem Gründungsort abgesenkt und gegebenenfalls fixiert wird, zeichnet sich dadurch aus, dass mindestens ein absenkbarer Auftriebskörper seitlich an die Gründungsstruktur an Pfahlhülsen lösbar angehängt wird.

Bevorzugt werden mehrere Auftriebskörper an die Gründungsstruktur seitlich angekuppelt, und zwar lösbar. Die Auftriebskörper geben der Gründungsstruktur auf dem Wasser zunächst hinreichenden Auftrieb. Die Auftriebskörper bilden so Schwimmer, womit die von den Auftriebskörpern getragene Gründungsstruktur schwimmend zum Gründungsort transportierbar ist. Durch ein Fluten der Auftriebskörper wird die Gründungsstruktur abgesenkt. Anschließend werden die Auftriebskörper von der Gründungsstruktur entfernt und gelenzt, so dass sie wieder an die Wasseroberfläche gelangen. Das Lenzen geschieht beispielsweise über Lenzpumpen oder Pumpen, die Luft in die Auftriebskörper pumpen.

Die Aufgabe wird auch durch ein Verfahren zur Deinstallation einer Gründungsstruktur für eine Offshore-Anlage, beispielsweise eine Offshore-Windenergieanlage, wobei die Gründungsstruktur schwimmend zum Gründungsort transportiert wird, gelöst, das sich dadurch auszeichnet, dass absenkbare Auftriebskörper an der Gründungsstruktur lösbar angehängt werden. Die Auftriebskörper werden anschließend gelenzt, wodurch sie die Gründungsstruktur anheben.

In einer vorteilhaften Ausführungsform beider Verfahren werden die Auftriebskörper seitlich an die Gründungsstruktur, insbesondere an Pfahlhülsen, angehängt. Dadurch sind die Auftriebskörper ohne nennenswerte Hilfsmittel an die Gründungsstruktur ankoppelbar und genauso einfach abkoppelbar.

Die Auftriebskörper können bei den verschiedenen Varianten der Verfahren vor dem Transport oder Abtransport der Gründungsstruktur seitlich an die abgesenkte Gründungsstruktur angekoppelt werden oder es wird durch Ablassen der schwebenden Gründungsstruktur von einem Hebelmittel die Gründungsstruktur an die Auftriebskörper angekoppelt.

Darüber hinaus erlaubt die Anbringung vorzugsweise mehrerer, insbesondere gleicher Auftriebskörper an eine Gründungsstruktur oder einen Verbund von Gründungsstrukturen, diese schwimmend zu lagern. Durch eine besondere Formgebung der Auftriebskörper, die ein weitgehendes Umschließen der Gründungsstrukturen von außen erlauben, werden die Gründungsstrukturen gesichert, beispielsweise gegen äußere Stoßeinwirkungen.

Das Absenken und Anheben der Gründungsstruktur geschieht vorzugsweise mit Unterstützung eines Krans. Der Kran dient dabei aber nur zur Führung der Gründungsstruktur beim Absenken derselben durch Fluten der Auftriebskörper. Der Kran braucht deshalb nicht das Gewicht der gesamten Gründungsstruktur zu tragen.

Die Aufgabe der Erfindung wird außerdem durch eine Gründungsstruktur für eine Offshore-Anlage, beispielsweise eine Offshore-Windenergieanlage, gelöst, die Kopplungsmittel zum lösbaren Anhängen vorzugsweise mehrerer Auftriebskörper aufweist.

Unabhängig von der Anbringung der Auftriebskörper an der Gründungsstruktur ist letztere in einer vorteilhaften Ausführungsform mit mindestens einer geschlossenen Kammer oder einem Behälter ausgerüstet, die sich gleichfalls fluten und/oder lenzen lassen. Weist die Gründungsstruktur ein Zentralrohr auf, so ist diese mindestens eine geschlossene Kammer im Zentralrohr vorgesehen oder das Zentralrohr ist als eine solche Kammer ausgebildet. Mit Hilfe eines partiellen oder vollständigen Flutens und/oder Lenzens des Zentralrohrs werden Vorgänge wie das Absenken oder das Aufschwimmen der Gründungsstruktur unterstützt und/oder kontrolliert.

Weiterhin sind die Auftriebskörper für eine Gründungsstruktur einer Offshore-Anlage, beispielsweise einer Offshore-Windenergieanlage, mit mindestens einer geschlossenen oder verschließbaren Kammer ausgestattet und weisen Kopplungsmittel zum lösbaren Anhängen an die Gründungsstruktur auf.

Die Kopplungsmittel sind bevorzugt zum seitlichen, lösbaren Anhängen an die Gründungsstruktur, insbesondere korrespondierend zu einem im abgesenkten Zustand der Gründungsstruktur einen Untergrund berührenden Element der Gründungsstruktur, zum Beispiel zu einer Pfahlhülse, ausgebildet Die den Untergrund berührenden Pfahlhülsen oder andere Elemente der Gründungsstruktur werden durch den Auftriebskörper von außen im Wesentlichen halb umschlossen, die Pfahlhülsen und die Auftriebskörper sind dabei durch die Kopplungsmittel vorzugsweise formschlüssig verbunden.

Die mindestens eine Kammer des jeweiligen Auftriebskörpers ist in einer vorteilhaften Ausführungsform der Erfindung flutbar und/oder lenzbar ausgebildet. Auf diese Weise wird ein besonders einfaches Absenken oder Aufschwimmen der Gründungsstruktur ermöglicht. Das Fluten und/oder Lenzen des Auftriebskörpers erfolgt vorzugsweise mit Hilfe von Pumpeinrichtungen, Für den Fall, dass mehrere Auftriebskörper an einer Gründungsstruktur angeordnet sind, erfolgt das Fluten und/oder Lenzen der Auftriebskörper synchron. Dadurch wird ein kontrolliertes Absenken oder Aufschwimmen der Gründungsstrukturen gewährleistet. Insbesondere wird so ein exakt senkrechtes Absenken oder Anheben der Gründungsstruktur herbeigeführt.

In einer bevorzugten Variante weisen die Auftriebskörper Verbindungsmittel zum modularen Verbinden mit weiteren Auftriebskörpern auf. Dadurch ist ein schwimmender Transport mehrerer Gründungsstrukturen im Verbund möglich.

Die Geometrie des Auftriebskörpers ist mit Vorteil für ein raumsparendes Verbinden mit weiteren Auftriebskörpern ausgelegt, Durch eine besondere Formgebung der Auftriebskörper, zum Beispiel mit einem trapezförmigen Umriss, sind eine modulare Verbindung mit weiteren Auftriebskörpern und ein kompakter und stabiler Verbund mehrerer Gründungsstrukturen zu einer Transportfläche möglich.

Die Auftriebskörper sind mit Vorteil robust, vor allem stabil, gefertigt und für einen mehrfachen Einsatz ausgelegt. Dazu eignet sich besonders die Herstellung der Auftriebskörper aus Stahl, und zwar gegebenenfalls aus rostfreiem Stahl.

Ein Ausführungsbeispiel der Erfindung wird im Folgenden anhand der Zeichnung näher erläutert. In dieser zeigen:
- Fig. 1: eine schematische Seitenansicht einer Gründungsstruktur eines so genannten Tripod,
- Fig. 2: eine schematische Ansicht auf die Gründungsstruktur in Fig. 1 von oben.
- Fig. 3: eine schematische Ansicht auf die Gründungsstruktur in Fig. 1 von oben mit drei Auftriebskörpern,
- Fig. 4: eine schematische Ansicht auf einen modularen Verbund von acht Gründungsstrukturen mit jeweils drei Auftriebskörpern von oben,
- Fig. 5: einen mittigen Vertikalschnitt durch eine Pfahlhülse der Gründungsstruktur und einen seitlich an die Pfahlhülse angekoppelten, mittig geschnittenen Auftriebskörper,
- Fig. 6: eine Einzelheit VI gemäß der Fig. 5 in vergrößerter Darstellung,
- Fig. 7: einen mittigen Vertikalschnitt durch eine Pfahlhülse der Gründungsstruktur mit einem montierten Gründungspfahl im mittigen Längsschnitt, und
- Fig. 8 bis 10: drei schematische Seitenansichten der Gründungsstruktur in Fig. 1 mit drei Auftriebskörpern während des Absenkens an einem Gründungsort.

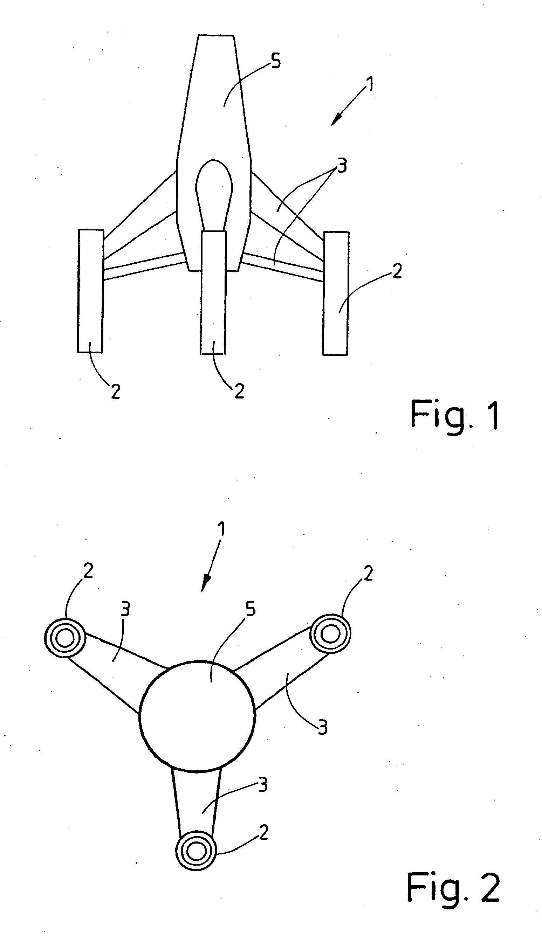

Fig. 1 zeigt eine schematische Seitenansicht einer Gründungsstruktur 1 mit drei Pfahlhülsen 2 eines so genannten Tripod. Jede der drei Pfahlhülsen 2 ist im gezeigten Ausführungsbeispiel mit zwei schräg verlaufenden Streben 3 an einem Zentralrohr 5 befestigt. Die senkrechten Pfahlhülsen 2 sind an ihren oberen und unteren Stirnseiten offen. Die Erfindung ist aber nicht auf solchermaßen (als Tripod) ausgebildete Gründungsstrukturen 1 beschränkt; sie eignet sich vielmehr für Gründungsstrukturen aller Art.

In Fig. 2 wird eine schematische Ansicht auf die Gründungsstruktur 1 in Fig. 1 von oben gezeigt. Die drei Pfahlhülsen 2 sind radialsymmetrisch mit Abstand um das Zentralrohr 5 angeordnet. Jede Pfahlhülse 2 umgibt vorzugsweise mit etwas Spiel einen Teil (bezogen auf die Länge) eines Gründungspfahls 4.

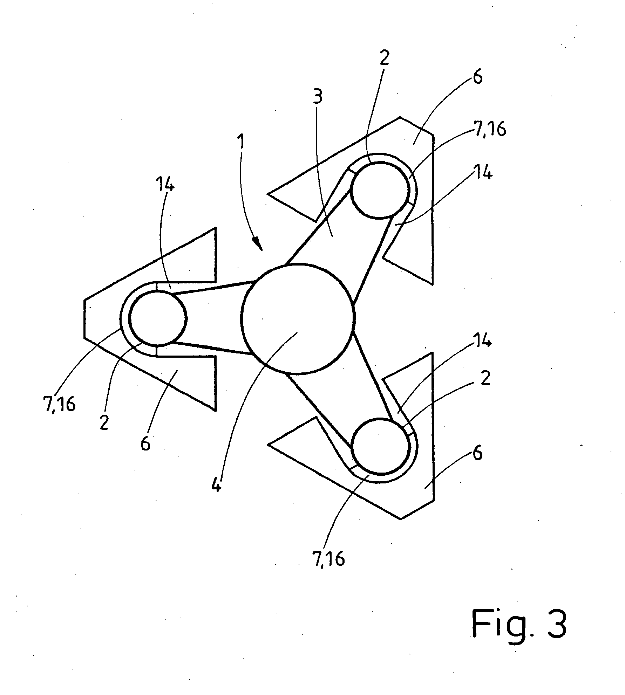

Fig. 3 zeigt ebenfalls eine schematische Ansicht der Gründungsstruktur 1 in Fig. 1 von oben. In diesem Fall ist an jeder der drei gleich ausgebildeten Pfahlhülsen 2 ein Auftriebskörper 6 angeordnet. Die gleichermaßen ausgebildeten Auftriebskörper 6 umschließen die Pfahlhülsen 2 jeweils U-förmig von außen. Dazu weist jeder Auftriebskörper 6 eine einseitig offene Ausnehmung 14 auf, die im Grundriss U-förmig ausgebildet ist. Das halbkreisförmige Ende der jeweiligen Ausnehmung 14 umschließt dadurch den halben Umfang einer jeweiligen Pfahlhülse 2. Von oben gesehen verfügt jeder Auftriebskörper 6 über eine trapezförmige Grundfläche. Die größere Seite des trapezförmigen Auftriebskörpers 6 liegt von der Mitte des Zentralrohrs 5 der Gründungsstruktur 1 gesehen außen. Die Auftriebskörper 6 sind von außen an die jeweilige Pfahlhülse 2 angesetzt, indem jeder Auftriebskörper 6 seitlich von außen an eine Pfahlhülse 12 lösbar angekoppelt ist. Auf diese Weise ist die Gründungsstruktur 1 mit den Pfahlhülsen 2 an die drei seitlichen Auftriebskörper 6 angehängt.

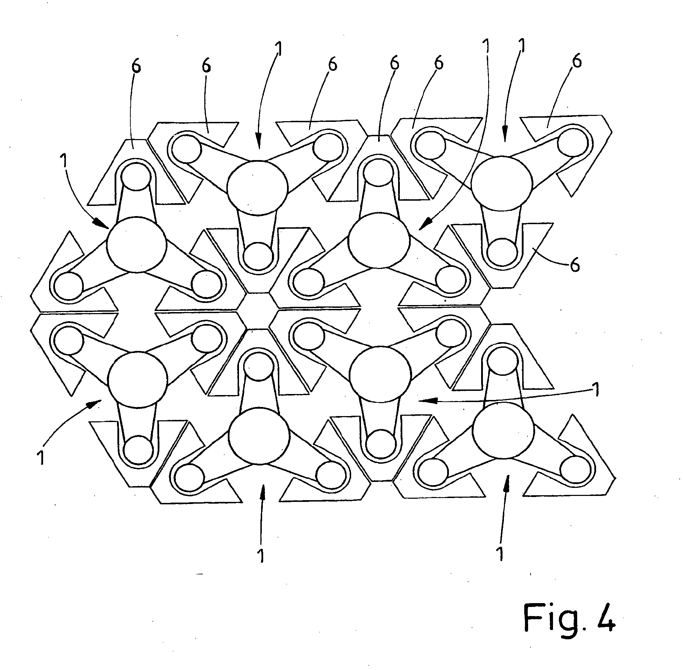

In Fig. 4 ist eine schematische Ansicht auf einen modularen Verbund von acht Gründungsstrukturen 1 mit jeweils drei Auftriebskörpern 6 von oben dargestellt. Durch die Grundfläche der Auftriebskörper 6 mit trapezförmigem Umriss ist eine Platz sparende Anordnung von Gründungkörpern 1 auf einer verhältnismäßig kleinen Transportfläche möglich. Die Auftriebskörper 6 der einzelnen Gründungsstrukturen 1 sind zur Herstellung des Verbundes mehrerer Gründungsstrukturen 1 zumindest teilweise durch in der Fig. 4 nicht gezeigte lösbare Verbindungsmittel zusammengehängt. Dadurch ist es möglich, gleichzeitig mehrere Gründungsstrukturen 1 an Auftriebskörpern 6 hängend zum jeweiligen Gründungsort zu schwimmen.

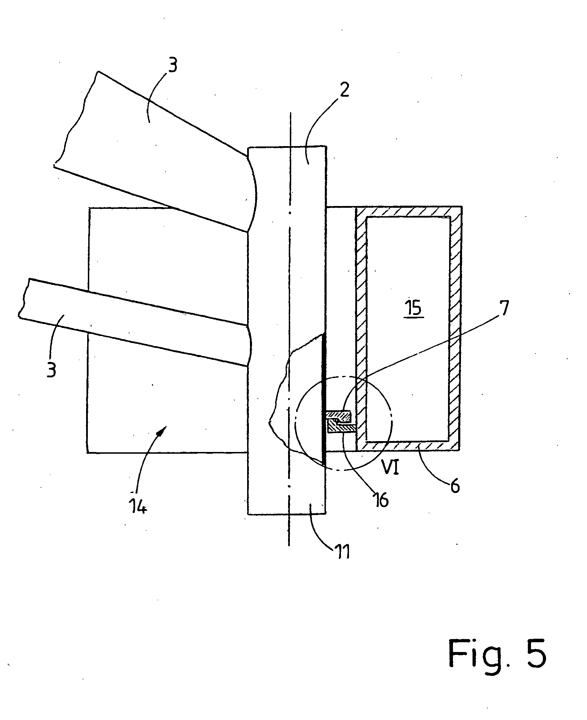

Die Fig. 5 zeigt einen Längsschnitt durch eine Pfahlhülse 2 und einen daran angekoppelten Auftriebskörper 6 im Schnitt. Jeder Auftriebskörper 6 ist als ein geschlossener, wasserdichter Schwimmer ausgebildet. Dazu ist im Inneren der hier gezeigten Auftriebskörper 6 eine geschlossene bzw. schließbare Kammer 15 angeordnet. Im Auftriebskörper 6 können auch mehrere getrennte Kammern vorgesehen sein. Die Kammer 15 jedes Auftriebskörpers 6 ist mit mindestens einem Ventil zum Fluten und zum Lenzen des Auftriebskörpers 6 versehen. Das Fluten geschieht durch gezieltes Einleiten von beispielsweise Seewasser in die jeweilige Kammer 15 des Auftriebskörpers 6. Zum Lenzen der Kammer 15 wird entweder das Wasser aus der Kammer 15 herausgepumpt oder durch Einleiten von Druckluft herausgedrückt.

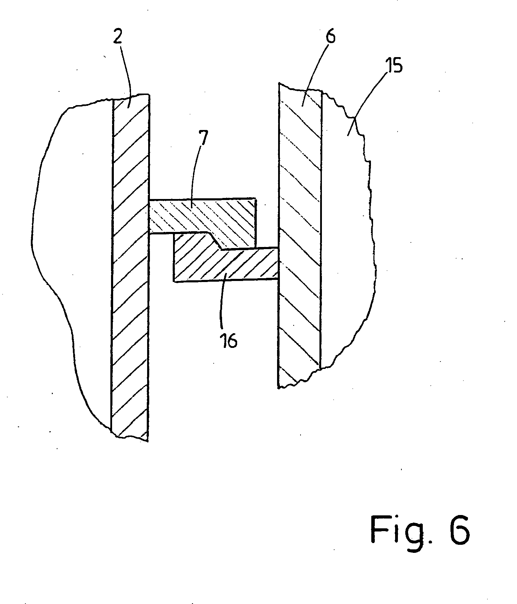

Die Pfahlhülse 2 und der Auftriebskörper 6 sind über ein Paar von Kopplungsmitteln 7, 16 lösbar miteinander verbunden. Die beiden in der Fig. 6 gezeigten Kopplungsmittel 7 und 16 sind derart korrespondierend zueinander angeordnet, dass sie eine lösbare Rastverbindung zwischen der Pfahlhülse 2 und dem jeweiligen Auftriebskörper 6 bilden. Dazu sind Kopplungsmittel 7 und 16 als formschlüssig ineinandergreifende halbkreisförmige Ringpratzen ausgebildet. Die Ringpratzen jedes Kopplungsmittels 7 und 16 weisen einen Vorsprung mit einem (von oben gesehen) halbkreisförmigen Verlauf auf, die durch Ineinandergreifen die formschlüssige, aber lösbare Verbindung zwischen der jeweiligen Pfahlhülse 2 und dem entsprechenden Auftriebskörper 6 herstellen, wenn der jeweilige Auftriebskörper 6 relativ zur Pfahlhülse 2 nach oben bewegt oder die Pfahlhülse 2 relativ zum Auftriebskörper 6 abgesenkt wird. Umgekehrt wird die formschlüssige Verbindung der Kopplungsmittel 7 und 16 gelöst, wenn der Auftriebskörper 6 relativ zur Pfahlhülse 2 nach unten bewegt wird oder die Gründungsstruktur 1 mit der jeweiligen Pfahlhülse 2 relativ zum Auftriebskörper 6 angehoben wird. Das Kopplungsmittel 7 ist fest mit der Außenseite der Pfahlhülse 2 verbunden, indem es eine außerseitige Hälfte der Pfahlhülse 2 halbkreisförmig umgibt. Demgegenüber ist das Kopplungsmittel 16 mit dem Auftriebskörper 6 verbunden, und zwar mit der halbkreisförmigen Innenseite der U-förmigen Ausnehmung 14 im Auftriebskörper 6.

Die korrespondierenden Vorsprünge der Kopplungsmittel 7, 16 sind mit Abschrägungen versehen, die beim Anhängen der Pfahlhülsen 2 der Gründungsstruktur 1 an die Auftriebskörper 6 kleine Toleranzen bezüglich der Position der Vorsprünge zueinander zulassen. Gleichfalls dienen die Abschrägungen der Kopplungsmittel 7, 16 dazu, beim Einrasten eine Bewegung zwischen der jeweiligen Pfahlhülse 2 und dem Auftriebskörper 6 zuzulassen, damit die Gründungssstruktur 1 und die Auftriebskörper 6 in eine korrekte Position zueinander gelangen.

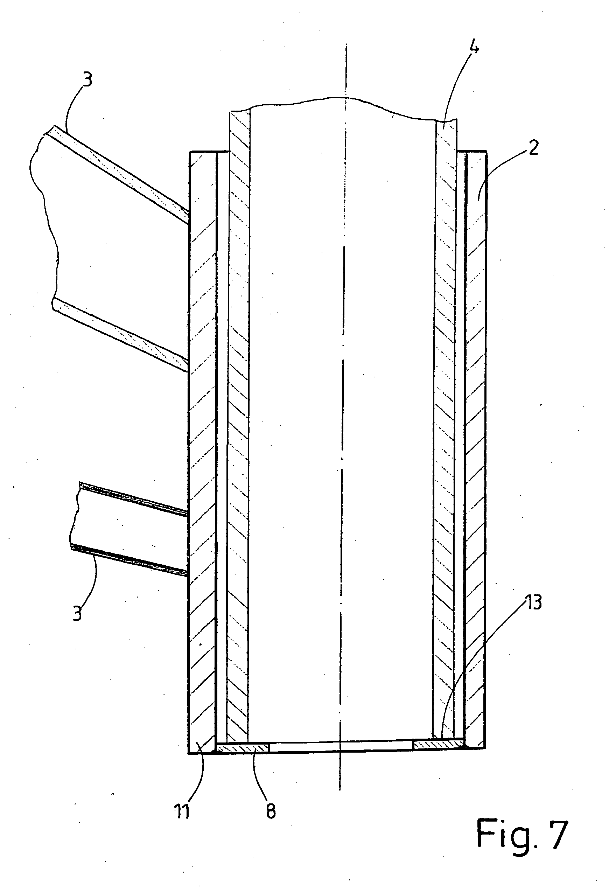

Fig. 7 zeigt einen Längsschnitt durch eine der Pfahlhülsen 2 der Gründungsstruktur 1 mit einem montierten Gründungspfahl 4, und zwar nur einen unteren Endbereich 11 desselben. Jede Pfahlhülse 2 weist ein Mittel zum Halten des Gründungspfahls 4 auf. Im gezeigten Ausführungsbeispiel ist das Mittel als eine Pfahlsperre 8 ausgebildet. Die Pfahlsperre 8 wird gebildet durch einen Ring, der am unteren Ende der jeweiligen Pfahlhülse 2 vorübergehend, nämlich zum Halten des vormontierten Gründungspfahls 4 bis nach dem Absenken der Gründungsstruktur 1 auf dem Meeresboden 10, befestigt ist, beispielsweise durch Schweißen. Die ringförmige Pfahlsperre 8 schnürt die Öffnung am unteren Ende der Pfahlhülse 2 soweit ein, dass eine Standfläche für eine untere Stirnfläche 13 der Pfahlhülse 12 entsteht, worauf die vormontierte Pfahlhülse 2 während des Transports der Gründungsstruktur 1 zum Gründungsort und zum Absenken der Gründungsstruktur 1 mit den Pfahlhülsen 2 ruht. Es sind auch andere Mittel zum Halten des unteren Endbereichs 11 des Gründungspfahls 4 in der jeweiligen Pfahlhülse 2 denkbar, beispielsweise unterbrochene Standfläche, Federzungen oder Klemmhülsen.

Die Befestigung der Pfahlsperren 8 an den Unterseiten der Pfahlhülsen 2 ist so getroffen, dass sie zuverlässig das Gewicht des jeweils in der Pfahlhülse 2 steckenden Gründungspfahls 4 aufnehmen. Durch starken Druck von oben, wie er beispielsweise durch das Einrammen des Gründungspfahls 4 in den Meeresboden 10 erforderlich ist, wird die jeweilige Pfahlsperre 8 zerstört, insbesondere die Verbindung desselben mit dem unteren Ende der jeweiligen Pfahlhülse 2 gelöst, so dass der Gründungspfahl 4 beim Einrammen in den Meeresboden 10 durch die Pfahlhülse 2 hindurchgleiten kann.

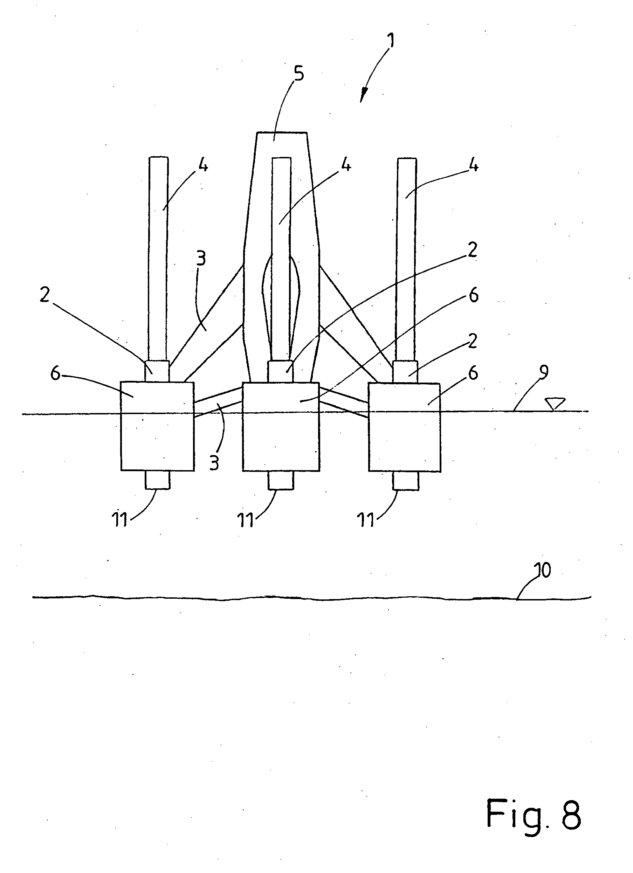

Das erfindungsgemäße Verfahren wird anhand der Fig. 8 bis 10 näher erläutert. In den Figuren ist eine Gründungsstruktur 1 mit drei vormontierten Gründungspfählen 4 gezeigt. Die Gründungspfähle 4 sind mit ihren unteren Endbereichen in die Pfahlhülsen 2 hineingesteckt, und zwar so weit, dass die Gründungspfähle 4 mit ihren Stirnflächen 13 auf Pfahlsperren 8 an der Unterseite der Pfahlhülsen 2 aufstehen. Zusätzlich sind die Pfahlhülsen 2 nur während des Transports zum Gründungsort an ihren oberen Endbereichen durch nicht gezeigte Kopfhalterungen verbunden, die die oben aus den Pfahlhülsen 2 herausragenden Gründungspfähle 4 während des Transports stabilisieren, insbesondere gegen Umkippen sichern.

Die Gründungsstruktur 1 mit den drei Gründungspfählen 4 ist zum Transport an den Gründungsort an die drei Auftriebskörper 6 angehängt. Jeder Auftriebskörper 6 ist von der Seite her lösbar an eine Pfahlhülse 2 mit den Kopplungsmittel 7, 16 angekoppelt. Dabei sind die Kopplungsmittel 7, 16 in einer solchen Höhe an den Auftriebskörpern 6 und an den Pfahlhülsen 2 angebracht, dass gemäß der Darstellung in der Fig. 5 die Pfahlhülsen 2 mit einem unteren Endbereich 11 nach unten gegenüber den Auftriebskörpern 6 vorstehen. Das Maß, um das untere Abschnitte der Pfahlhülse 2 gegenüber den Unterseiten der Auftriebskörper 6 vorstehen, ist so gewählt, dass durch eine Abwärtsbewegung der Auftriebskörper 6 an den Pfahlhülsen 2 die formschlüssige Verbindung der Kopplungsmittel 7 und 16 zwischen Auftriebskörpern 6 und den Pfahlhülsen 2 lösbar ist.

Das Anhängen der Auftriebskörper 6 an die Gründungsstruktur 1 erfolgt so, dass die Gründungsstruktur 1 mit den Pfahlhülsen 2 und den darin eingesteckten Gründungspfählen 4 auf die Wasseroberfläche 9 abgesenkt wird, bis die Pfahlhülsen 2 etwas in das Wasser eintauchen. Dann werden die bereits im Wasser schwimmenden Auftriebskörper 6 von außen seitlich an die Pfahlhülsen 2 herangefahren, wobei die Pfahlhülsen 2 in die U-förmigen Ausnehmungen 14 der Auftriebskörper 6 eingreifen. Durch weiteres Absenken der Gründungsstruktur 1 wird ein Formschluss zwischen den Gründungsmitteln 7 und 16 hergestellt und dabei die lösbaren Verbindungen der Auftriebskörper 6 mit den Pfahlhülsen 2 der Gründungsstruktur 1 herbeigeführt. Nachdem diese Verbindungen erfolgt sind, hängt die Gründungsstruktur 1 mit den vormontierten Gründungspfählen 4 an den seitlich neben den Pfahlhülsen 2 sich befindenden Auftriebskörpern 6.

Die Fig. 8 zeigt die schwimmende Gründungsstruktur 1 mit vormontierten Gründungspfählen 4. Die Gründungsstruktur 1 ist dazu an den Auftriebskörpern 6 aufgehängt, die von der Seite her an die Pfahlhülsen 2 der Gründungsstruktur 1 angekoppelt sind, und zwar lösbar. Im gezeigten Zustand kann die Gründungsstruktur 1 mit den Gründungspfählen 4 schwimmend zum Gründungsort transportiert werden, vorzugsweise durch Schleppen. Den nötigen Auftrieb zum schwimmenden Transport erhält die Gründungsstruktur 1 durch die Auftriebskörper 6. Diese sind zum schwimmenden Transport der Gründungsstruktur 1 gelenzt, und zwar vorzugsweise vollständig. Die Kammern 15 des Auftriebskörpers 6 enthalten deswegen beim Transport der Gründungsstruktur 1 kein Wasser oder allenfalls Restmengen an Wasser. Bei schwerer See kann es vorgesehen sein, die Auftriebskörper 6 teilweise zu fluten, und zwar nur so weit, dass die Gründungsstruktur 1 mit den Auftriebskörpern 6 noch schwimmend transportiert werden kann. Hierdurch wird der Schwerpunkt der an den Auftriebskörpern 6 hängenden Gründungsstruktur 1 erniedrigt, was vor allem bei schwerer See den schwimmenden Transport der an den Auftriebskörpern 6 hängenden Gründungsstruktur 1 mit den Gründungspfählen 4 sicherer macht.

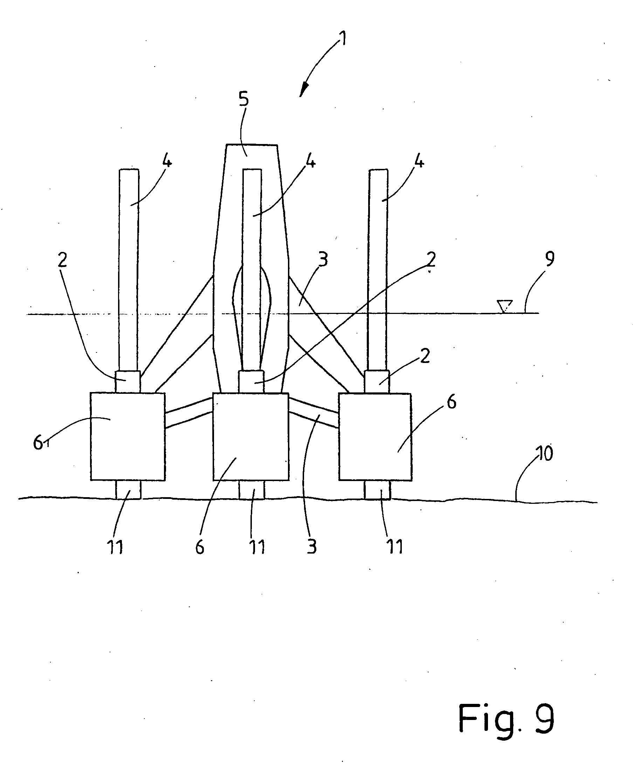

Am Gründungsort erfolgt ein Absenken der Gründungsstruktur 1 mit den Gründungspfählen 4 durch ein zumindest teilweises Fluten der Kammern 15 der Auftriebskörper 6. Das Fluten geschieht allmählich, und zwar synchron, so dass die Gründungsstruktur 1 nahezu senkrecht abgesenkt wird. Gegebenenfalls kann das senkrechte Absenken der Gründungsstruktur 1 unterstützt werden durch einen oben an der Gründungsstruktur 1 angreifenden Kran, der eine nach oben gerichtete Zugkraft auf die Gründungsstruktur 1 ausübt, ohne jedoch in der Lage sein zu müssen, das Gewicht der gesamten Gründungsstruktur 1 einschließlich der Gründungspfähle 4 tragen zu können. Die Auftriebskörper 6 werden langsam und synchron geflutet, bis die Gründungsstruktur 1 gemäß der Fig. 9 auf dem Untergrund, im gezeigten Ausführungsbeispiel den Meeresboden 10, aufliegt, und zwar vorzugsweise mit den unteren Stirnflächen der Pfahlhülsen 2. Dabei bleiben die Auftriebskörper 6 noch an den Pfahlhülsen 2 angekoppelt, bis die Gründungsstruktur 1 ihre vorgesehene Position auf dem Meeresboden 10 erreicht hat. Die Position kann gegebenenfalls korrigiert werden durch teilweises Lenzen der Auftriebskörper 6, wodurch sie die Gründungsstruktur 1 wieder etwas anheben oder in eine Art Schwebezustand im Wasser versetzen.

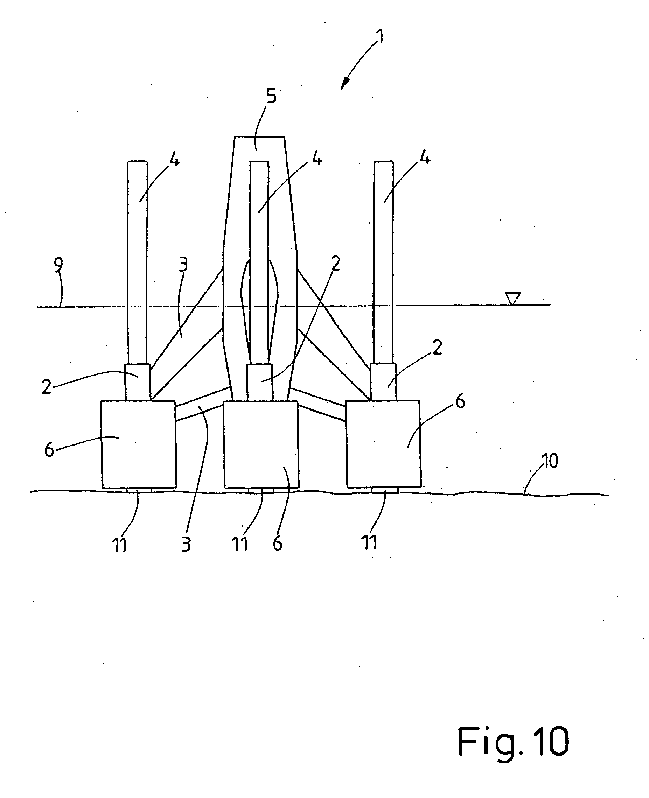

Die Fig. 10 erläutert das Abkoppeln der Auftriebskörper 6 von den Pfahlhülsen 2 der Gründungsstruktur 1. Zu diesem Zweck werden die Auftriebskörper 6 so weit geflutet, beispielsweise vollständig geflutet, dass sie relativ zu den Pfahlhülsen 2 sich nach unten bewegen, und zwar beispielsweise so weit, dass sie nahezu auf dem Meeresboden 10 aufliegen. Durch diese Relativbewegung der Auftriebskörper 6 zu den Pfahlhülsen 2 werden die Kopplungsmittel 16 an den Auftriebskörpern 6 relativ zu den Kopplungsmitteln 7 an den Pfahlhülsen 2 abgesenkt und dadurch die formschlüssige Verbindung der Auftriebskörper 6 mit den Pfahlhülsen 2 der Gründungsstruktur 1 gelöst. Es lassen sich nun die Auftriebskörper 6 von den Pfahlhülsen 2 radial nach außen abziehen, indem die Pfahlhülsen 2 aus den U-förmigen Ausnehmungen 14 in den Auftriebskörpern 6 sozusagen ausgefädelt werden. Durch anschließendes vollständiges oder mindestens teilweises Lenzen der Auftriebskörper 6 werden ihre Kammern 15 zumindest teilweise vom Wasser geleert. Die Auftriebskörper 6 gelangen dadurch an die Wasseroberfläche 9, wodurch die Auftriebskörper 6 wieder für einen neuen Einsatz zur Verfügung stehen.

Nachdem die Gründungsstruktur 1 gemeinsam mit den in den Pfahlhülsen 2 steckenden Gründungspfählen 4 auf den Meeresboden 10 abgesenkt ist, wird die Gründungsstruktur 1 am Gründungsort verankert durch mindestens teilweises Einrammen der Gründungspfähle 4 in den Meeresboden 10. Beim Beginn des Einrammens werden von den unteren Stirnflächen 13 der Pfahlhülsen 2 die Pfahlsperren 8 an den Unterseiten der Pfahlhülsen 2 getrennt. Die Gründungspfähle 4 können nun beim weiteren Einrammen durch die Pfahlhülsen 2 hindurchgleiten.

Das erfindungsgemäße Anhängen der beliebig ausgestalteten Gründungsstruktur 1 an Auftriebskörper 6 kann auch zum Einsatz kommen, wenn die Gründungsstruktur 1 anders als zuvor beschrieben ohne bereits in die Pfahlhülsen 2 eingesetzte Gründungspfähle 4 zum Gründungsort geschleppt und dort abgesetzt werden. Beispielsweise ist auch die Erfindung realisierbar, wenn die Gründungspfähle 4 separat zum Gründungsort transportiert und erst nach dem Absenken der Gründungsstruktur 1 auf den Meeresboden 10, und nachdem gegebenenfalls die Auftriebskörper 6 von der Gründungsstruktur 1 abgekoppelt worden sind, montiert werden.

### Bezugszeichenliste:

- 1: Gründungsstruktur
- 2: Pfahlhülse
- 3: Strebe
- 4: Gründungspfahl
- 5: Zentralrohr
- 6: Auftriebskörper
- 7: Kopplungsmittel
- 8: Pfahlsperre
- 9: Wasseroberfläche
- 10: Meeresboden
- 11: unterer Endbereich
- 13: untere Stirnfläche
- 14: Ausnehmung
- 15: Kammer
- 16: Kopplungsmittel

## Patentansprüche

1. Verfahren zur Installation einer Gründungsstruktur (1) für eine Offshore-Anlage, beispielsweise eine Offshore-Windenergieanlage, wobei die Gründungsstruktur (1) zu einem Gründungsort transportiert und an dem Gründungsort bis auf den Meeresboden (10) abgesenkt wird, wobei die Gründungsstruktur (1) an mindestens einem absenkbaren Auftriebskörper (6) lösbar angehängt wird, und wobei sie schwimmend transportiert wird, **dadurch gekennzeichnet, dass** der mindestens eine Auftriebskörper (6) seitlich an die Gründungsstruktur (1) an Pfahlhülsen (2) angehängt wird.

2. Verfahren nach Anspruch 1, **dadurch gekennzeichnet, dass** das Absenken der Gründungsstruktur (1) durch ein Fluten des mindestens einen Auftriebskörpers (6) und ein Anheben der Gründungsstruktur (1) durch ein Lenzen des mindestens einen Auftriebskörpers (6) erfolgt.

3. Verfahren nach Anspruch 1 oder 2, **dadurch gekennzeichnet, dass** die Gründungsstruktur (1) durch mindestens teilweises Einrammen wenigstens eines Gründungspfahls (4) in den Meeresboden (10) am Gründungsort verankert wird. wobei der Gründungspfahl (4) vorzugsweise in eine der an der Gründungsstruktur (4) befestigten Pfahlhülsen (2) eingesetzt wird.

4. Verfahren nach einem der Ansprüche 1 bis 3, **dadurch gekennzeichnet, dass** das Absenken und/oder Anheben der Gründungsstruktur (1) geführt und mit insbesondere einem Kran oder dergleichen erfolgt.

5. Verfahren nach einem der Ansprüche 1 bis 4, **dadurch gekennzeichnet, dass** die vorzugsweise mehreren Auftriebskörper (6) vor dem Transport oder Abtransport der Gründungsstruktur (1) seitlich an die Gründungsstruktur (1), insbesondere jede Pfahlhülse (2), angekoppelt werden.

6. Verfahren nach einem der Ansprüche 1 bis 5, **dadurch gekennzeichnet, dass** das lösbare Ankoppeln der Auftriebskörper (6) an die Gründungsstruktur (1) formschlüssig durch eine senkrechte Relativbewegung der Auftriebskörper (6) zur Gründungsstruktur (1) erfolgt, vorzugsweise durch ein Absenken der Gründungsstruktur (1) relativ zu den Auftriebskörpern (6) und/oder ein Aufschwimmen der Auftriebskörper (6) relativ zu der Gründungsstruktur (1).

7. Gründungsstruktur für eine Offshore-Anlage, beispielsweise eine Offshore-Windenergieanlage, mit mindestens einem Auftriebskörper (6) und mit Kopplungsmitteln (7, 16) zum lösbaren Anhängen des Auftriebskörpers (6), **gekennzeichnet durch** Pfahlhülsen (2), wobei der Auftriebskörper (6) seitlich an eine der Pfahlhülsen (2) mittels der Kopplungsmittel (7, 16) lösbar angehängt ist.

8. Gründungsstruktur nach Anspruch 7, **dadurch gekennzeichnet, dass** die Kopplungsmittel (7) der Pfahlhülsen (2) korrespondierend zu den Kopplungsmitteln (7, 16) der Auftriebskörper (6) ausgebildet sind, wobei vorzugsweise die Kopplungsmittel (7) der Pfahlhülsen (2) durch eine senkrechte Relativbewegung zu den Kopplungsmitteln (16) der Auftriebskörper (6) zusammen- und/oder auseinanderkoppelbar sind.

9. Gründungsstruktur nach Anspruch 7 oder 8, **dadurch gekennzeichnet, dass** der Auftriebskörper mit mindestens eine geschlossene Kammer (15) und mit mindestens einem Kopplungsmittel (7, 16) ausgebildet ist, und/oder dass der Auftriebskörper (6) mit dem mindestens einen Kopplungsmittel (7, 16) zum lösbaren Anhängen an eine Gründungsstruktur (1) einer Offshore-Anlage, beispielsweise einer Offshore-Windenergieanlage, seitlich an die Gründungsstruktur (1) an Pfahlhülsen (2) anhängbar ist.

10. Gründungsstruktur nach einem der Ansprüche 7 bis 9, **dadurch gekennzeichnet, dass** das jeweilige Kopplungsmittel (7, 16) zum seitlichen Anhängen an die Gründungsstruktur (1), insbesondere mit einem im abgesenkten Zustand der Gründungsstruktur (1) einen Untergrund berührenden Element der Gründungsstruktur (1), zum Beispiel einer Pfahlhülse (2), ausgebildet ist.

11. Gründungsstruktur nach einem der Ansprüche 7 bis 10, **gekennzeichnet durch** eine seitlich offene Ausnehmung (14), die vorzugsweise eine Pfahlhülse (2) der Gründungsstruktur (1) teilweise, insbesondere zur Hälfte, umgibt.

12. Gründungsstruktur nach einem der Ansprüche 7 bis 11, **dadurch gekennzeichnet, dass** die mindestens eine Kammer (11) flutbar und/oder lenzbar ausgebildet ist.

13. Gründungsstruktur nach einem der Ansprüche 7 bis 12, **gekennzeichnet durch** Verbindungsmittel zum modularen Verbinden mit weiteren Auftriebskörpern (6).

14. Gründungsstruktur nach einem der Ansprüche 7 bis 13, **dadurch gekennzeichnet, dass** die Geometrie des Auftriebskörpers (6) für ein flächensparendes Verbinden mit weiteren Auftriebskörpern (6) ausgelegt ist, wobei vorzugsweise der äußere Grundriss der Auftriebskörper (6) trapezförmig ist.

## Claims

1. Method for installing a foundation structure (1) for an offshore installation, for example an offshore wind turbine generator system, the foundation structure (1) being transported to a foundation site and lowered at the foundation site to the sea bottom (10), the foundation structure (1) being releasably attached to at least one lowerable float (6), and it being transported in a floating manner, **characterized in that** the at least one float (6) is attached laterally in relation to the foundation structure (1) to pile sleeves (2).

2. Method according to Claim 1, **characterized in that** the lowering of the foundation structure (1) is performed by flooding the at least one float (6) and raising the foundation structure (1) by pumping out the at least one float (6).

3. Method according to Claim 1 or 2, **characterized in that** the foundation structure (1) is anchored at the foundation site by at least partially ramming at least one foundation pile (4) into the sea bottom (10), the foundation pile (4) preferably being inserted into one of the pile sleeves (2) that are fastened to the foundation structure (4).

4. Method according to one of Claims 1 to 3, **characterized in that** the lowering and/or raising of the foundation structure (1) is performed in a guided manner and in particular with a crane or the like.

5. Method according to one of Claims 1 to 4, **characterized in that**, before the foundation structure (1) is transported, or transported away, the preferably multiple floats (6) are coupled laterally to the foundation structure (1), in particular to each pile sleeve (2).

6. Method according to one of Claims 1 to 5, **characterized in that** the releasable coupling of the floats (6) to the foundation structure (1) is performed with positive engagement by a vertical relative movement of the floats (6) in relation to the foundation structure (1), preferably by a lowering of the foundation structure (1) in relation to the floats (6) and/or by a rising up of the floats (6) in relation to the foundation structure (1).

7. Foundation structure for an offshore installation, for example an offshore wind turbine generator system, with at least one float (6) and with coupling means (7, 16) for releasably attaching the float (6), **characterized by** pile sleeves (2), the float (6) being releasably attached laterally to one of the pile sleeves (2) by means of the coupling means (7, 16).

8. Foundation structure according to Claim 7, **characterized in that** the coupling means (7) of the pile sleeves (2) are formed so as to correspond to the coupling means (7, 16) of the floats (6), the coupling means (7) of the pile sleeves (2) preferably being able to be coupled together and/or uncoupled from one another by a vertical relative movement in relation to the coupling means (16) of the floats (6).

9. Foundation structure according to Claim 7 or 8, **characterized in that** the float is formed with at least one closed chamber (15) and with at least one coupling means (7, 16), and/or **in that** the float (6) is able to be attached by the at least one coupling means (7, 16) laterally in relation to the foundation structure (1) to pile sleeves (2) for releasable attachment to a foundation structure (1) of an offshore installation, for example an offshore wind turbine generator system.

10. Foundation structure according to one of Claims 7 to 9, **characterized in that** the respective coupling means (7, 16) is designed for lateral attachment to the foundation structure (1), in particular so as to correspond to an element of the foundation structure (1) that makes contact with an underlying surface in the lowered state of the foundation structure (1), for example a pile sleeve (2).

11. Foundation structure according to one of Claims 7 to 10, **characterized by** a laterally open clearance (14), which preferably surrounds a pile sleeve (2) of the foundation structure (1) partially, in particular by half.

12. Foundation structure according to one of Claims 7 to 11, **characterized in that** the at least one chamber (11) is designed such that it can be flooded and/or pumped out.

13. Foundation structure according to one of Claims 7 to 12, **characterized by** connecting means for connecting to further floats (6) in a modular manner.

14. Foundation structure according to one of Claims 7 to 13, **characterized in that** the geometry of the float (6) is designed for connecting to further floats (6) in an area-saving manner, the outer plan view of the floats (6) preferably being trapezoidal.

## Revendications

1. Procédé d'installation d'une structure de fondation (1) pour une installation offshore, par exemple une installation d'éoliennes offshore, la structure de fondation (1) étant transportée jusqu'à un lieu de fondation et étant abaissée au lieu de fondation jusqu'au fond de la mer (10), la structure de fondation (1) étant attachée de manière amovible à au moins un flotteur (6) pouvant être abaissé, et étant transportée en suspension dans l'eau, **caractérisé en ce que** l'au moins un flotteur (6) est accroché latéralement à la structure de fondation (1) au niveau de manchons de piliers (2).

2. Procédé selon la revendication 1, **caractérisé en ce que** l'abaissement de la structure de fondation (1) a lieu en noyant l'au moins un flotteur (6) et un soulèvement de la structure de fondation (1) a lieu en déballastant l'au moins un flotteur (6).

3. Procédé selon la revendication 1 ou 2, **caractérisé en ce que** la structure de fondation (1) est ancrée au site de fondation par l'enfoncement au moins partiel d'au moins un pilier de fondation (4) dans le fond de la mer (10), le pilier de fondation (4) étant de préférence inséré dans un manchon de pilier (2) fixé à la structure de fondation (1).

4. Procédé selon l'une quelconque des revendications 1 à 3, **caractérisé en ce que** l'abaissement et/ou le soulèvement de la structure de fondation (1) s'effectuent de manière guidée et notamment avec une grue ou similaire.

5. Procédé selon l'une quelconque des revendications 1 à 4, **caractérisé en ce que** les préférablement plusieurs flotteurs (6) sont accouplés avant le transport ou le transfert de la structure de fondation (1) latéralement à la structure de fondation (1), notamment à chaque manchon de pilier (2).

6. Procédé selon l'une quelconque des revendications 1 à 5, **caractérisé en ce que** l'accouplement amovible des flotteurs (6) à la structure de fondation (1) s'effectue par engagement positif par un mouvement relatif vertical des flotteurs (6) par rapport à la structure de fondation (1), de préférence par un abaissement de la structure de fondation (1) par rapport aux flotteurs (6) et/ou une remontée en surface des flotteurs (6) par rapport à la structure de fondation (1).

7. Structure de fondation pour une installation offshore, par exemple une installation d'éoliennes offshore, comprenant au moins un flotteur (6) et des moyens d'accouplement (7, 16) pour l'accrochage amovible du flotteur (6), **caractérisée par** des manchons de piliers (2), le flotteur (6) étant accroché de manière amovible latéralement à l'un des manchons de piliers (2) par l'intermédiaire des moyens d'accouplement (7, 16).

8. Structure de fondation selon la revendication 7, **caractérisée en ce que** les moyens d'accouplement (7) des manchons de piliers (2) sont réalisés de manière correspondant aux moyens d'accouplement (7, 16) des flotteurs (6), de préférence les moyens d'accouplement (7) des manchons de piliers (2) pouvant être accouplés les uns aux autres et/ou désaccouplés les uns des autres par un mouvement relatif vertical par rapport aux moyens d'accouplement (16) des flotteurs (6).

9. Structure de fondation selon la revendication 7 ou 8, **caractérisée en ce que** le flotteur est réalisé avec au moins une chambre fermée (15) et au moins un moyen d'accouplement (7, 16), et/ou **en ce que** le flotteur (6) peut être accroché par l'au moins un moyen d'accouplement (7, 16) pour l'accrochage amovible à une structure de fondation (1) d'une installation offshore, par exemple d'une installation d'éoliennes offshore, latéralement à la structure de fondation (1) à des manchons de piliers (2).

10. Structure de fondation selon l'une quelconque des revendications 7 à 9, **caractérisée en ce que** chaque moyen d'accouplement (7, 16) est réalisé pour l'accrochage latéral à la structure de fondation (1), notamment pour correspondre à un élément de la structure de fondation (1) en contact avec un subjectile dans l'état abaissé de la structure de fondation (1), par exemple un manchon de pilier (2).

11. Structure de fondation selon l'une quelconque des revendications 7 à 10, **caractérisée par** un évidement ouvert latéralement (14) qui entoure partiellement, notamment à moitié, de préférence un manchon de pilier (2) de la structure de fondation (1).

12. Structure de fondation selon l'une quelconque des revendications 7 à 11, **caractérisée en ce que** l'au moins une chambre (11) est réalisée de manière à pouvoir être noyée et/ou déballastée.

13. Structure de fondation selon l'une quelconque des revendications 7 à 12, **caractérisée par** des moyens de connexion pour la connexion modulaire à d'autres flotteurs (6).

14. Structure de fondation selon l'une quelconque des revendications 7 à 13, **caractérisée en ce que** la géométrie du flotteur (6) est conçue pour une connexion de surface compacte à d'autres flotteurs (6), le pourtour extérieur des flotteurs (6) étant de préférence trapézoïdal.
